Europäisches Patentamt

European Patent Office

Office européen des brevets

(11) Publication number: **0 279 622 B1**

(12) # EUROPEAN PATENT SPECIFICATION

(45) Date of publication of patent specification :
06.03.91 Bulletin 91/10

(51) Int. Cl.⁵ : **F25B 41/00, F25B 41/04, B60H 1/32**

(21) Application number : 88301262.7

(22) Date of filing : 16.02.88

(54) Control device for a refrigeration circuit.

(30) Priority : 16.02.87 JP 19889/87

(43) Date of publication of application :
24.08.88 Bulletin 88/34

(45) Publication of the grant of the patent :
06.03.91 Bulletin 91/10

(84) Designated Contracting States :
DE FR GB IT SE

(56) References cited :
DE-B- 1 247 884
US-A- 3 640 086
US-A- 4 324 112

(73) Proprietor : SANDEN CORPORATION
20 Kotobuki-cho
Isesaki-shi Gunma, 372 (JP)

(72) Inventor : Sato, Motoharu
3-11-38 Ojimaminami
Honjo-shi Saitama 367 (JP)

(74) Representative : Jackson, Peter Arthur et al
Gill Jennings & Every, 53-64 Chancery Lane
London WC2A 1HN (GB)

## Description

This invention relates to a control device for controlling the flow volume of refrigerant in a refrigeration circuit, such as is used in an automobile.

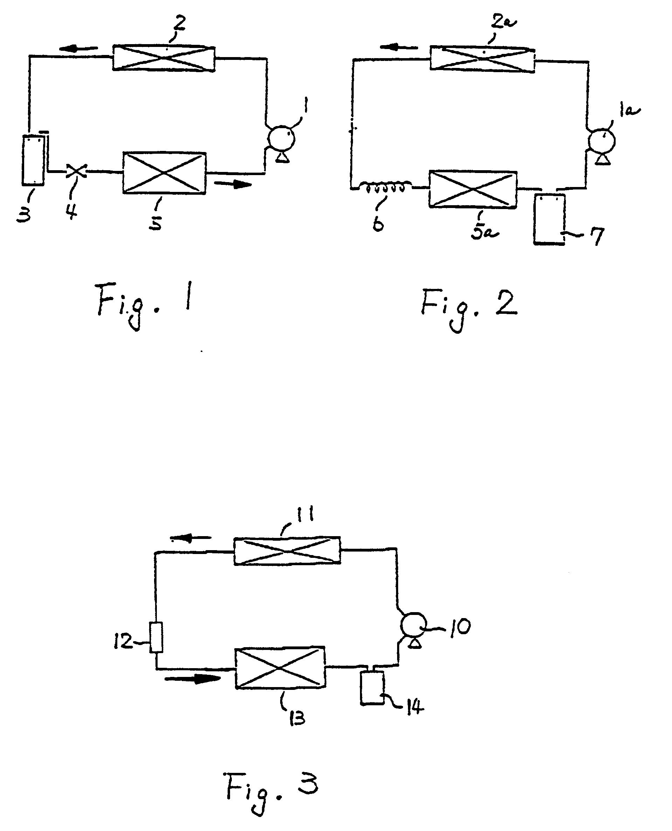

Referring to Fig. 1, there is shown a conventional refrigerant circuit for use in an automotive air conditioning system and it comprises a compressor 1, a condenser 2, a receiver dryer 3, an expansion device 4 and an evaporator 5 connected together in series. As is well-known, a thermostatic expansion valve is utilized in the circuit as the expansion device 4 to expand the refrigerant and to control flow volume of the refrigerant. The operation of the expansion valve 4 depends upon the degree of superheat of the refrigerant at the outlet side of the evaporator 5. The refrigeration circuit is usually operated within a range of five to eight degrees of superheat to minimize loss of efficiency of the compressor while avoiding damage to valves in the compressor 1 due to sucking in liquid refrigerant. Further, if the refrigeration circuit is utilized in an automotive air conditioner, the flow volume of the refrigerant is drastically changed in accordance with changes in the rotational speed of the engine. As a result, liquid refrigerant may be returned to the suction side of the compressor under certain conditions and hunting phenomena may also occur under low flow volume conditions.

As shown in Fig. 2, another conventional refrigeration circuit includes a compressor 1a, a condenser 2a, an expansion device 6, such as a capillary, an evaporator 5a and an accumulator 7, each of which is connected in series. Since the accumulator 7 is connected to the outlet side of the evaporator 5a, the degree of superheat that is required at the outlet side of the evaporator 5a to avoid liquid entering the compressor is nearly zero and the heat exchange efficiency of the evaporator is therefore improved. However, under conditions of low or medium volumes of refrigerant flow, liquid refrigerant may accumulate in the accumulator 7 and be sucked into the compressor 1a. On the other hand, under the condition of high refrigerant flow volume, the liquid refrigerant may accumulate in the condenser 2a, thus reducing the capacity of the condenser 2a and the liquid refrigerant in the accumulator 7 becomes insufficient for the system. The degree of superheat of the refrigerant at the outlet side of the evaporator 5a thus increases abnormally. To maintain sufficient volume of liquid refrigerant in the circuit, the accumulator 7 must be enlarged. The above two circuits are exemplified in US-A-4539823 and US-A-4130997.

It is a primary object of this invention to provide a control device for a refrigeration circuit which easily controls the flow volume of the refrigerant and may easily be inserted in a conventional circuit without any difficulty.

US-A-3640086 discloses a control device for a refrigeration circuit and comprising a tubular casing having a passageway therethrough, a first dividing wall across the passageway and having at least one hole therethrough, a second dividing wall across the passageway and having a throat therethrough, and an expandible element having one end attached to the first dividing wall and, attached to its other end, an operating valve for sealing the throat upon expansion of the element in response to a change in the temperature of refrigerant in the casing and in accordance with the invention, such a device is characterised in that the element is a bellows; and in that the control device further comprises a bypass hole or channel formed through the second dividing wall and positioned so as not to be sealed by the operating valve when the valve is sealing the throat.

The invention will now be described with reference to the accompanying drawings, in which :-

Fig. 1 is a schematic diagram of a conventional refrigeration circuit;

Fig. 2 is a schematic diagram of another conventional refrigeration circuit;

Fig. 3 is a schematic diagram of a refrigeration circuit incorporating a control device in accordance with the present invention;

Fig. 4 is a cross-sectional view of a first example of the control device of Fig. 3;

Fig. 5(a) is a cross-sectional view of a second example of the control device of Fig. 3; and,

Fig. 5(b) is a cross-sectional view of the control device of Fig. 5(a) taken on the line A-A.

In Fig. 3, a refrigeration circuit comprises a compressor 10, a condenser 11, a control device 12, an evaporator 13 and an accumulator 14. The condenser 11 is connected to the outlet port of the compressor 10 and is also connected to the control device 12. The evaporator 13 is connected to the control device 12 and is also coupled to the inlet port of the compressor 10 through the accumulator 14.

Referring to Fig. 4, the control device 12 includes a tubular casing 121, a first dividing wall 122, a second dividing wall 123 and a third dividing wall 124. Each of the dividing walls 122, 123 and 124 is rigidly attached to the inner surface of the tubular casing 121 at spaced apart positions. The first dividing wall 122 has a pair of holes 122a to allow refrigerant to pass to the interior of a first chamber 113, which is defined by the first and second dividing walls. A shank portion 122b is located within the first chamber 113. The second dividing wall 123 has a throat 123a, which includes a valve seat 123b at one end, and a bypass hole 123c. The throat 123a and the bypass hole 123c run parallel to each other. The cross sectional area of the bypass hole 123c is less than that of the throat 123a. The third dividing wall 124 has an orifice 124a formed through its centre. A bellows 125 is mounted on the free end of the shank portion 122b mounted on the first dividing wall 122. An operating valve 126 is attached to the bellows 125, which are charged with refrigerant which is maintained always to be saturated. The bellows 125 are made of a high thermal conductivity material.

In operation, when the compressor 10 is driven, the refrigerant in the refrigeration circuit flows into the first chamber 113 through the holes 122a in the first dividing wall 122. The bellows 125 detect the temperature of the refrigerant in the first chamber 113 and move the operating valve 126 right or left in response to the temperature of the refrigerant, so that the pressure of the refrigerant within the bellows 125 balances with that of the refrigerant in the first chamber 113. As a result, the size of the unobstructed area of the seat 123b is changed in accordance with the operation of the bellows 125. Even when the opening of the throat 123a is closed by the operating valve 126, because the bypass hole 123c is always open, the refrigerant in the first chamber 113 flows into a second chamber 114, which is defined between the second dividing wall 123 and the third dividing wall 124. When the air conditioning load is small, the fluid in the bellows 125 is approximately at the same pressure as the surrounding refrigerant, but hunting of the bellows 125 is prevented by virtue of a stable amount of refrigerant always flowing through the bypass hole 123c. Also, when the compressor 10 is started, the flow through the hole 123c reduces the time taken for the pressure in the first chamber 113 to rise high enough to force the bellows 125 to contract and thereby open the throat 123a. If refrigerant leaks out of the refrigeration circuit, the pressure in the circuit drops and the valve 126 will close the throat 123a, but the bypass hole 123c will ensure that the remaining refrigerant is still able to flow into the compressor 10, thereby delaying seizure of the compressor.

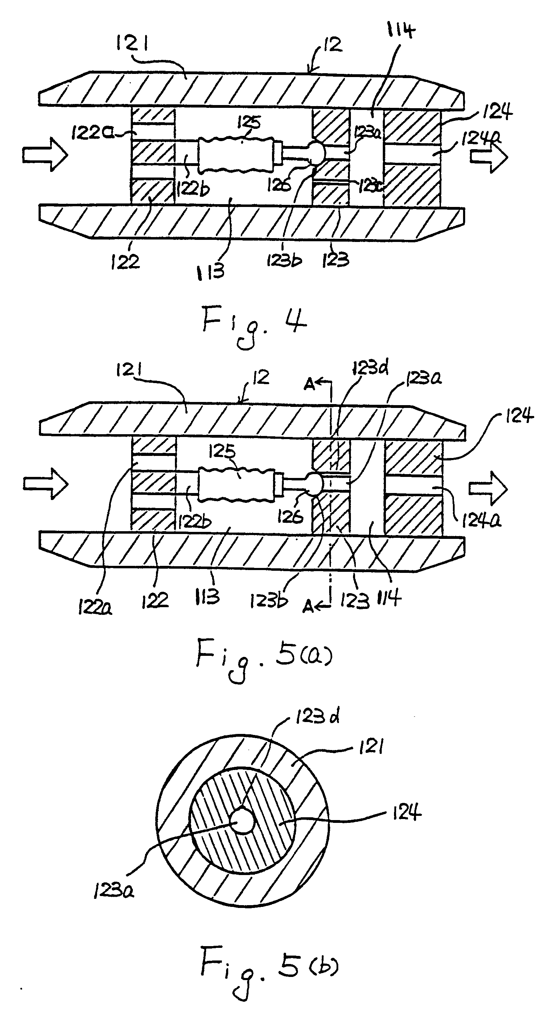

Referring to Figs. 5(a) and (b), a modification of the control device is shown. The same reference numerals are used for those components also found in the example shown in the Fig. 4 and a description of these components is omitted for the sake of simplicity. A bypass channel 123d is formed in the side wall of the throat 123a. Therefore, even when the seat 123b is sealed by the operating valve 126, because the bypass channel 123d is not blocked by the valve 126, the refrigerant in the first chamber 113 is able to flow into the second chamber 114. Thus, this example of control valve is as effective as the first example.

The devices may omit the third dividing wall 124, in which case an expansion device such as a capillary will need to be included in the circuit.

## Claims

1. A control device (12) for a refrigeration circuit and comprising a tubular casing (121) having a passageway therethrough, a first dividing wall (122) across the passageway and having at least one hole (122a) therethrough, a second dividing wall (123) across the passageway and having a throat (123a) therethrough, and an expandible element 125) having one end attached to the first dividing wall (122) and, attached to its other end, an operating valve (126) for sealing the throat (123a) upon expansion of the element (125) in response to a change in the temperature of refrigerant in the casing ; characterised in that the element (125) is a bellows ; and in that the control device (12) further comprises a bypass hole (123c) or channel (123d) formed through the second dividing wall (123) and positioned so as not to be sealed by the operating valve (126) when the valve (126) is sealing the throat (123a).

2. A control device (12) according to claim 1, further comprising a third dividing wall (124) across the passageway on the side of the second dividing wall (123) remote from the first dividing wall (122), the third dividing wall (124) having an orifice (124a) therethrough.

3. A control device (12) according to claim 1 or claim 2, wherein the bellows (125) is charged with saturated fluid.

4. A control device (12) according to any of the preceding claims, wherein the bypass channel (123d) is formed in the side wall of the throat (123a).


## Ansprüche

1. Steuereinrichtung (12) für einen Kältekreislauf mit einem röhrenförmigen Gehäuse (121) mit einem Durchgang dadurch, einer ersten unterteilenden Wand (122) quer durch den Durchgang und mit mindestens einem Loch (122a) dadurch, einer zweiten unterteilenden Wand (123) quer durch den Durchgang und mit einer Öffnung (123a) dadurch, und einem ausdehnbaren Element (125), dessen eines Ende an der ersten unterteilenden Wand (122) angebracht ist und an dessen anderem Ende ein Betätigungsventil (126) zum Abdichten der Öffnung (123a) auf die Ausdehnung des Elementes (125) hin als Reaktion auf eine Änderung in der Temperatur eines Kühlmittels in dem Gehäuse angebracht ist ; dadurch gekennzeichnet, daß das Element (125) ein Balgen ist ; und daß die Steuereinrichtung (12) ein Nebenloch (123c) oder -kanal (123d) aufweist, das/der durch die zweite unterteilende Wand (123) gebildet ist und so angeordnet ist, daß es/er durch das Betätigungsventil (126) nicht abgedeckt ist, wenn das Ventil (126) die Öffnung (123a) abdichtet.

2. Steuereinrichtung (12) nach Anspruch 1, weiter mit einer dritten unterteilenden Wand (124) quer durch den Durchgang auf der von der ersten unterteilenden Wand (122) abgewandten Seite der zweiten unterteilenden Wand (123), wobei die dritte unterteilende Wand (124) ein Mundloch (124a) dadurch aufweist.

3. Steuereinrichtung (12) nach Anspruch 1 oder 2, bei der der Balgen (125) mit einem gesättigten Fluid beaufschlagt ist.

4. Steuereinrichtung (12) nach einem der vorhergehenden Ansprüche, bei der der Nebenkanal (123d) in der Seitenwand der Öffnung (123a) gebildet ist.


## Revendications

1. Dispositif de commande (12) pour un circuit frigorifique, comprenant une enveloppe tubulaire (121) munie d'un passage à travers celle-ci, une première paroi de séparation (122) placée en travers du passage et percée d'au moins un trou (122a), une seconde paroi de séparation (123) placée en travers du passage et percée d'une lumière (123a), et un élément dilatable (125) dont une extrémité est fixée à la première paroi de séparation (122) et à l'autre extrémité duquel est fixée une soupape de manoeuvre (126) destinée à fermer la lumière (123a) de manière étanche lorsque l'élément (125) se dilate en réponse à une variation de la température du réfrigérant contenu dans l'enveloppe ; dispositif caractérisé en ce que l'élément dilatable (125) est un soufflet, et en ce que le dispositif de commande (12) comprend en outre un trou de dérivation (123c) ou un passage de dérivation (123d) percés dans la seconde paroi de séparation (123) et placés de manière à ne pas être obturés par la soupape de manoeuvre (126) lorsque celle-ci obture la lumière (123a) de manière étanche.

2. Dispositif de commande (12) selon la revendication 1, caractérisé en ce qu'il comprend en outre une troisième paroi de séparation (124) placée en travers du passage du côté de la seconde paroi de séparation (123) opposé à la première paroi de séparation (122), cette troisième paroi de séparation (124) étant percée d'un orifice (124a).

3. Dispositif de commande (12) selon l'une quelconque des revendications 1 et 2, caractérisé en ce que le soufflet (125) est chargé de fluide saturé.

4. Dispositif de commande (12) selon l'une quelconque des revendications précédentes, caractérisé en ce que le passage de dérivation (123d) est formé dans la paroi latérale de la lumière (123a).

Fig. 1

Fig. 2

Fig. 3

Fig. 4

Fig. 5(a)

Fig. 5(b)